Europäisches Patentamt

European Patent Office

Office européen des brevets

(19)

(11) Veröffentlichungsnummer: **0 218 973**
**B1**

(12) **EUROPÄISCHE PATENTSCHRIFT**

(45) Veröffentlichungstag der Patentschrift:
31.01.90

(21) Anmeldenummer: 86113320.5

(22) Anmeldetag: 27.09.86

(51) Int. Cl.⁴: **F 16 L 55/12, F 16 L 55/10**

(54) Verfahren und Vorrichtung zum zeitweiligen Verschliessen von Grossrohrleitungen.

(30) Priorität: 05.10.85 DE 3535622

(43) Veröffentlichungstag der Anmeldung:
22.04.87 Patentblatt 87/17

(45) Bekanntmachung des Hinweises auf die Patenterteilung:
31.01.90 Patentblatt 90/5

(84) Benannte Vertragsstaaten:
**DE FR GB**

(56) Entgegenhaltungen:
**EP-A- 0 145 114**
**AT-B- 281 511**
**DD-A- 209 363**
**DE-A- 2 330 807**
**DE-A- 3 232 603**

(73) Patentinhaber: **Ruhrgas Aktiengesellschaft,
Huttropstrasse 60 Postfach 10 32 52,
D-4300 Essen 1 (DE)**

(72) Erfinder: **Hilringhaus, Karl-Heinz, Birkenstrasse 70,
D-4250 Bottrop (DE)**
Erfinder: **Boer, Hubert, Hohe Mark 8,
D-4421 Reken 4 (DE)**
Erfinder: **Sommers, Hans, Dipl.-Ing., Hemsingskotten 2,
D-4300 Essen 15 (DE)**

(74) Vertreter: **Zenz, Joachim Klaus, Dipl.-Ing. et al, ZENZ &
HELBER Patentanwälte Am Ruhrstein 1,
D-4300 Essen 1 (DE)**

ACTORUM AG

## Beschreibung

Die Erfindung betrifft ein Verfahren zum zeitweiligen Verschließen von Großrohrleitungen, bei dem im Bereich des zu verschließenden Abschnittes in der Wandung der Rohrleitung eine Öffnung hergestellt, durch diese eine flüssigkeitsdichte Blase eingeführt und die Blase mit einem wenigstens teilweise flüssigen Medium soweit gefüllt wird, bis die Blase an den Innenwandungen der Rohrleitung anliegt. Ferner bezieht sich die Erfindung auf eine Vorrichtung zum zeitweiligen Verschließen von Großrohrleitungen unter Verwendung einer flüssigkeitsdichten Blase, die in eine Öffnung der zu verschließenden Rohrleitung einführbar und auf deren Innenquerschnitt aufweitbar ist.

Aus der DE-C-2 740 975 ist ein Verfahren bekannt, bei dem ein mit Wasser gefüllter Rohrleitungsabschnitt an einer vorgegebenen Stelle mit Hilfe eines äußeren Kühlmantels zum Erstarren gebracht wird. Bei diesem bekannten Verfahren muß die für die Eispfropfenbildung benötigte Wassermenge zwischen zwei festen Verschlußkörpern nach Art von Molchen von einer Aufgabeschleuse aus durch die Leitung bis zu der zu verschließenden Rohrleitungsstelle vorgeschoben werden, d.h. je nach Relativlage der zu verschließenden Stelle zu der nächstgelegenen Schleuse unter Umständen über eine sehr lange Distanz. Entsprechend groß kann wegen der unvermeidbaren Leckverluste zwischen den beiden Verschlußkolben die benötigte Wassermenge sein. Das bekannte Verfahren wird daher insbesondere für das hydrostatische Prüfen einer Pipeline angewendet, bei dem die Pipeline im Bereich zwischen zwei Schleusen von Abschnitt zu Abschnitt durch Eispfropfenbildung verschlossen und abgedrückt wird, wobei die zwischen den beiden Verschlußkolben befindliche Wassermenge jeweils schrittweise zum Erstarren gebracht, nach Durchführung der Prüfmessung zumindest teilweise aufgetaut und nach dem Weiterbewegen an einer neuen vorgegebenen Stelle wieder vollständig gefroren wird. Der erhebliche betriebliche Aufwand und die Blockierung relativ großer Leitungslängen stehen dem Einsatz des bekannten Verfahrens zum Sperren von Rohrleitungen für Wartungs- oder Änderungsarbeiten in vielen Fällen entgegen. Dies gilt vor allem dann, wenn die Gesamtanlage während der Wartungs- oder Änderungsarbeiten in Betrieb bleiben soll.

Bekannt sind auch luftgefüllte Absperrblasen. Ihr Einsatz ist nicht ohne Probleme. Zum einen besteht die Gefahr eines unvorhersehbaren Platzens der luftgefüllten Blase, wodurch der zu verschließende Rohrquerschnitt schlagartig völlig geöffnet wird. Zum anderen sind luftgefüllte Blasen nur bei relativ niedrigen Leitungsdrücken verwendbar, da ihr Absperrvermögen von der begrenzten Festigkeit der Blasenhülle abhängig ist.

Aus der DD-A-209 363 ist ein Verfahren der gattungsgemäßen Art zum Absperren flüssigkeitsgefüllter Rohrleitungen bekannt. Die durch die Anbohrung in die zu verschließende Rohrleitung eingeführte Blase besteht aus elastischem Material und kann mit Gasen oder Flüssigkeiten soweit gefüllt werden, daß sich ihre Außenhaut an die Rohrleitungswand anlegt. Die aufgeweitete Blase wird an einen Kühlkreislauf angeschlossen, der ein Kühlmittel durch die Blase zirkulieren läßt. Die Kühlung führt zum Erstarren der an der Blasenaußenseite befindliche Flüssigkeit und damit zum Abdichten des Rohrquerschnitts bis zur Rohrwand. Nach dem Erstarren des Flüssigkeitsmediums in der Rohrleitung ist der Rohrleitungsquerschnitt unabhängig von der Standfestigkeit und Stabilität der eingeführten Blase abgeschlossen. Dieses bekannte Verfahren ist nur bei flüssigkeitsgefüllten, insbesondere wassergefüllten Rohrleitungen anwendbar. Das Ausmaß der Vereisung in der Umgebung der Blase und damit die Verschlußwirkung läßt sich von außen nicht ohne weiteres bestimmen.

Der Erfindung liegt die Aufgabe zugrunde, eine wirtschaftliche Möglichkeit zum genau kontrollierbaren Sperren von Rohrleitungen anzugeben, die einerseits unabhängig von dem durch die Rohrleitung fließenden Medium anwendbar ist und andererseits eine zuverlässige Abdichtung der Rohrleitung über den gesamten Rohrleitungsquerschnitt gewährleistet.

Ausgehend von dem Verfahren der eingangs genannten Art, wird diese Aufgabe erfindungsgemäß dadurch gelöst, daß eine elastisch nur wenig verformbare Blase verwendet wird, daß das die Blase füllende flüssige Medium durch Abkühlen zum Erstarren gebracht wird, wobei die Füllmenge (Inhalt) der Blase so gewählt wird, daß die Blase bei erstarrtem Medium an dem Innenumfang der Rohrleitung anliegt und deren Querschnitt über eine ausreichende Rohrleitungslänge schließt, und daß die Außenhaut der gekühlten Blase auf der Seite, die dem höheren Rohrdruck ausgesetzt wird, mit einem Wassernebel besprüht und eine zusätzlich abdichtende Eisschicht im Grenzbereich zwischen der Blase und der Innenwandung der Rohrleitung aufgebaut wird.

Die bei der Erfindung zum Einsatz kommende flüssigkeitsdichte und verformbare Blase begrenzt die Menge des benötigten Verschlußmediums auf eine Minimum, nämlich auf dasjenige Volumen, das von der Blase umschlossen wird. Das von der Leitung normalerweise geführte Medium ist für die Zuverlässigkeit der Anwendung des erfindungsgemäßen Verfahrens ohne Bedeutung. Ein wesentlicher Vorteil der Erfindung besteht darin, daß die flüssigkeitsdichte Blase das Verschlußmedium von dem Rohrleitungsmedium trennt und ein Auslaufen in die Rohrleitung verhindert, was insbesondere bei gasführenden Großrohrleitungen wichtig ist. Es können daher auch mit dem in der Rohrleitung befindlichen Medium unverträgliche Verschlußmedien zum Einsatz kommen, deren Aggregatzustandsänderungen von flüssig zu fest und umgekehrt mit geringerem Energieaufwand und unter günstigen Bedingungen bewirkt werden können. So kann beispielsweise bei einer gasführenden Rohrleitung auf ca. 85° C erhitztes Kalium-Aluminium-Sulfat (Alaun) als Verschlußmedium in die Blase gefüllt werden. Alaun erstarrt bei Abkühlung auf Umgebungstemperatur und dehnt sich wie Wasser beim Erstarren aus, wodurch es die mit dem Medium gefüllte Blase unter Verschlußbildung an die Innenwandung der Rohrleitung drückt. Das Auftauen eines solchen Verschlußmediums zum Öffnen des zeitweiligen Verschlusses geschieht durch Wärmezufuhr vorzugsweise von außen. Die Energie, die einerseits zum Abführen und andererseits zum Zuführen von Wärme für die Änderung des Aggregatzustandes des Verschlußmediums aufzubringen und dem Verschlußmedium zuzuführen ist, ist in jedem Falle abhängig von der Menge des Verschlußmediums. Mit der Begrenzung der Verschlußmedienmenge erreicht die Erfindung daher auch eine entsprechende Senkung der Betriebsenergie. Die Verschlußmedienmenge (das Füllvolumen der Blase) kann beim Füllvorgang z.B. durch ein Schauglas an der Füllvorrichtung gemessen werden.

Insbesondere bei Einsatz der Erfindung zum zeitweiligen Verschließen von gasführenden Großrohrleitungen wird als Verschlußmedium vorzugsweise Wasser oder ein Wasser/Eisgemisch verwendet. Wird die Blase zerstört, so kann das Wasser zwar in die Rohrleitung ausfließen, bleibt jedoch unschädlich, da es von dem trockenen Gas aufgenommen wird. Die Absperrblase sorgt durch die Volumenvergrößerung beim Erstarren des in ihr eingeschlossenen Verschlußmediums für einen festen, zuverlässigen Rohrleitungsverschluß, der selbst erheblichen Druckdifferenzen in den beiden Rohrleitungszweigen zu beiden Seiten der Absperrblase ohne Verrutschen standhält.

Auf der tiefgekühlten Außenhaut der Blase und der Rohrinnenwand kommt der erfindungsgemäß vorgesehene Wassernebel, der gegebenenfalls noch vorhandener Leckströmung folgt, unmittelbar beim Auftreffen zum Erstarren. Er versteift und stabilisiert die Blase und bildet eine zusätzlich abdichtende Eisschicht, die vor allem im Grenzbereich zwischen der Blase und der Innenwandung der Rohrleitung günstig ist. Unebenheiten und dadurch bedingte Undichtigkeiten werden durch die Eisschicht kompensiert und ausgefüllt, so daß ein völlig gasdichter Verschluß der Rohrleitung entsteht.

Die zum Erstarren des in der Blase befindlichen Verschlußmediums erforderliche Wärmeabfuhr kann durch auf die Außenwandung der Rohrleitung aufgebrachtes Trockeneis; durch Berieselung des Rohres mit gekühlter Sole, die unterhalb der Rohrleitung z.B. in einer Wanne wieder aufgefangen wird; mittels an eine Kältemaschine angeschlossener und im wärmeleitenden Kontakt auf der Rohraußenwand angeordneter Kühlrohre bzw. Schläuche; oder durch Fluten eines die Außenwandung der Rohrleitung umgebenden Mantels mit einem Kältemittel (z.B. flüssigem Stickstoff) erfolgen. In Weiterbildung der Erfindung gelingt eine besonders energiesparende Wärmeabfuhr dadurch, daß parallel zur Außenkühlung ein Kühlmittelstrom über einen geschlossenen Kühlmittelkreis durch den Blaseninnenraum geleitet und zum Wärmeentzug aus dem in der Blase befindlichen Medium verwendet wird.

Bei Verwendung von Alaun als erstarrendes Verschlußmedium wird die Blase mit durch Erhitzen verflüssigtem Alaun soweit gefüllt, daß die Blase an den Innenwandungen der Rohrleitung anliegt und die Blase danach soweit abgekühlt, bis das in ihr befindliche Alaun unter Volumenvergrößerung erstarrt ist. Ein Erstarren des Alauns erfolgt bei der Abkühlung auf die Umgebungstemperatur. Durch eine zusätzliche Kühlung z.B. von innen her kann das Erstarren beschleunigt werden.

Die Aufhebung der Verschlußwirkung des erstarrten Alauns nach Beendigung der Wartungs- oder Reparaturarbeiten erfolgt durch Wärmezufuhr. Es wird solange ein Heizmittel bei einer ausreichend weit über dem Alaunschmelzpunkt gelegenen Temperatur durch eine vor dem Erstarren des Alauns in die Blase eingeführte Heizschlange geführt, bis das Alaun verflüssigt ist, dann das flüssige Alaun abgesaugt bzw. durch den Rohrleitungs-Überdruck aus der Blase gedrückt und danach die Blase entfernt. Die Zuführung der Wärme über eine Heizschlange ergibt bei relativ geringem Energieaufwand eine sehr rasche Wiederverflüssigung des Alauns. Durch Wärmezufuhr an der Rohraußenwand kann dieser Vorgang weiter beschleunigt werden.

Um in dem typischen Anwendungsfall der Erfindung, nämlich dem Sperren einer gasführenden Rohrleitung, das Medium in die Blase einführen zu können, wird es beim Befüllen der Blase unter einen Druck gesetzt, der um etwa 1 bis 1,5 m WS höher ist als der Rohrleitungs-Istdruck, wobei die Luft durch vorheriges Evakuieren oder durch das Medium aus der Blase gedrückt und nach außen abgeleitet wird. Bei kleinem Durchmesser der Verbindung zwischen Füllvorrichtung und Blase kann auch eine separate Entlüftungsleitung zum Einsatz kommen.

Als Blase kann bei der Durchführung des erfindungsgemäßen Verfahrens an sich eine einfache Gummiblase dienen, die einen Differenzdruck von 0,1 bis 0,15 m WS aushält. Vorzugsweise ist als Vorrichtung zur Durchführung des erfindungsgemäßen Verfahrens vorgesehen, daß die flüssigkeitsdichte, verformbare Blase eine dehnbare Innenhaut und eine diese umschließende, im wesentlichen undehnbare Außenhaut aufweist und daß die Außenhaut bei der Volumenvergrößerung des erstarrenden Verschlußmediums von der Innenhaut auf eine etwa sphäroidische Form aufweitbar ist, wobei der kleinste Außendurchmesser der aufgeweiteten Außenhaut etwas größer als der Innendurchmesser der Rohrleitung ist.

Im folgenden wird die Erfindung anhand von in der Zeichnung dargestellten Ausführungsbeispielen näher erläutert. In der Zeichnung zeigen:

Fig. 1 eine Absperrblase in Einbaustellung in einem teilweise geschnittenen Rohrleitungsabschnitt mit einem Kühlmantel, mit dem das in der Blase befindliche Verschlußmedium von der Rohraußenseite her durch Wärmeabfuhr zum Erstarren gebracht wird (die Abdichtung der Blasendurchführung am Rohr durch eine geeignete Zuführeinrichtung und die erforderliche Beipaßleitung zur Überbrückung der Sperre sind in der Zeichnung nicht dargestellt);

Fig. 2 einen vergrößerten Ausschnitt der Blasenwandung entsprechend dem Kreis II in Fig. 1; und

Fig. 3 die Vorrichtung zum zeitweiligen Verschließen einer Rohrleitung ähnlich derjenigen gemäß Fig. 1, wobei anstelle der Außenkühlung des Verschlußmediums eine in die Absperrblase eintauchende Kühl- oder Heizschlange zur direkten Kühlung oder Erwärmung des Verschlußmediums vorgesehen ist.

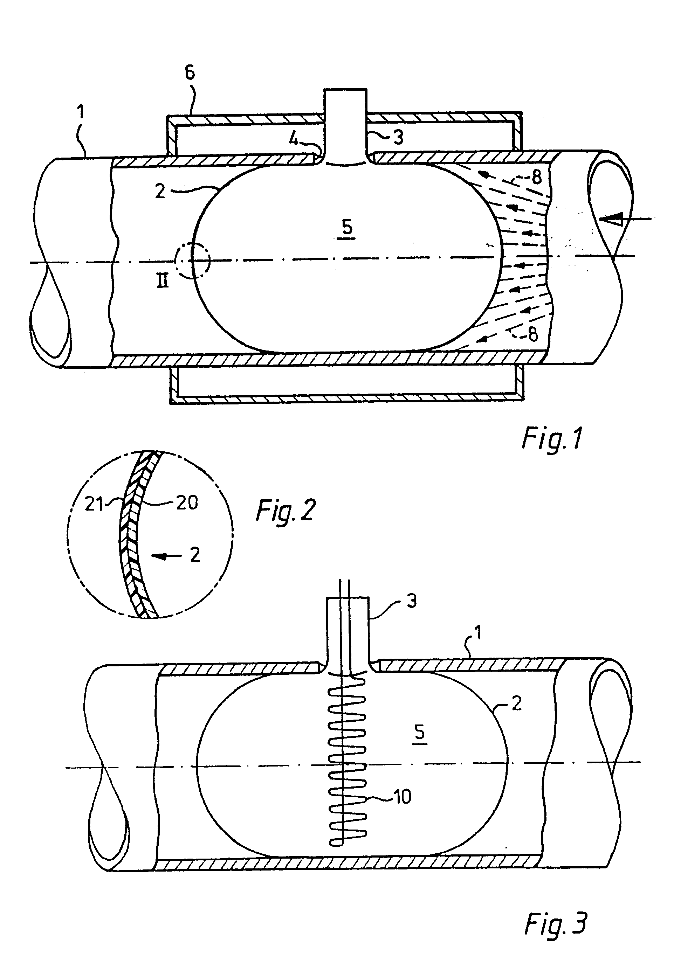

In Fig. 1 ist schematisch die zeitweilig zu verschließende Stelle einer Rohrleitung 1 dargestellt. In der Rohrleitung ist eine flüssigkeitsdichte, geringfügig dehnbare Absperrblase 2 angeordnet, die mit Wasser oder einem Wasser/Eisgemisch gefüllt wird und eine etwa späroidische Form besitzt. Die sphäroidische Blase 2 läßt sich unter dem Druck des zu Eis erstarrenden Verschlußmediums in der in Fig. 1 dargestellten Weise soweit aufweiten, daß der lichte Querschnitt des Rohres 1 von der Blase 2 über eine ausreichende Rohrlänge vollständig geschlossen ist.

Die Absperrblase 2 ist mit einer als Füllstutzen dienenden gasdichten Tülle 3 versehen, die durch eine radiale Rohrleitungsbohrung 4 geführt ist und zum Ein- und Abführen des Wassers in die bzw. aus der Blase 2 dient. Die Tülle 3 ist mit einem in der Zeichnung nicht dargestellten Druckgefäß verbunden, um die Blase beim Befüllen mit Wasser in situ auf den erforderlichen Querschnitt entgegen dem Rohrleitungsdruck aufweiten zu können. Die radiale Bohrung 4 ist mit einer nicht gezeichneten Vorrichtung versehen, die das Rohr 1 druckfest nach außen und zur Tülle 3 hin verschließt. Beim Befüllen der Blase 2 wird die in der Blase befindliche Luft entweder durch vorheriges Evakuieren durch eine gesonderte Lüftungsleitung oder — bei entsprechendem Leitungsquerschnitt — durch die Fülleitung ausgetrieben. Das Wasser nimmt daher nach dem Befüllen der Blase deren gesamten Innenraum 5 ein.

Ein in Fig. 1 schematisch dargestellter Kühlmantel 6 umgibt die Absperrzone der Rohrleitung 1 und damit die Blase und das in ihr enthaltene Wasser. Durch Trockeneisaufgabe oder andere an sich bekannte Mittel, z.B. Berieselung des Rohres mit kalter Sole, die Rohrleitung umschließende Kühlschlangen oder ein in den Mantel 6 eingefülltes flüssiges Kühlmittel, wird dem in der Blase 2 befindlichen Wasser Wärme entzogen und das Wasser zum Gefrieren gebracht. Das Kühlmittel kann aus Wasser mit einer definierten Konzentration von Frostschutzmittel für den gewünschten Eisflockungspunkt bestehen. In dieses «Bad» wird Trockeneis gegeben. Solange letzteres und auch Flüssigkeit vorhanden sind, ist die Temperatur konstant.

Beim Übergang von dem flüssigen in den festen Aggregatzustand des Wassers wird die Blase 2 durch die damit verbundene Volumenvergrößerung aufgeweitet, gespannt und mit solchem Druck gegen die Innenwand der Rohrleitung 1 gedrückt, daß die Blase 2 einen festen Verschlußstopfen in der Leitung 1 bildet, der selbst bei großen Druckunterschieden auf den beiden Rohrleitungsseiten keine Lageänderung erfährt. Beim Füllen und Erstarren der Blase soll die Druckdifferenz in dem zu verschließenden Rohrabschnitt gering sein, um ein Abrutschen der Blase aus deren Sollposition zu vermeiden. Zum Druckausgleich dient eine in der Zeichnung nicht dargestellte Beipaßleitung mit ausreichend großem Querschnitt. Erst nach völligem Einfrieren der Blase 2 darf die Rohrleitung 1 getrennt und die Blase mit der Druckdifferenz belastet werden.

Der Einfriervorgang sowie die weitere Wirksamkeit der Blase 2 kann durch Temperaturmessung mittels zwei Thermoelementen überwacht werden, von denen eines in der Blasenmitte und das andere im Blaseninnenraum nahe der Blasenhülle 2 angeordnet ist.

Bei einem in der Praxis realisierten Versuchsaufbau wurde eine Rohrleitung NW 100 mit einer Absperrblase 2 entsprechend der schematischen Darstellung in Fig. 1 versehen, mit einem Plastikschlauch zur Wärmeabführung (im Bereich des Kühlmantels 6) umwickelt und mit einer wärmeisolierenden Schicht umgeben. Der Schlauchwickel wurde von einer Kühlmaschine einer Leistung von 0,5 kW mit einem Kältemittel versorgt, das nach einer Behandlungsdauer von ca. 2 Stunden das Wasser in der Blase vollständig zum Erstarren brachte. Durch Eindüsen eines Wassernebels (in Fig. 1 durch die gestrichelten Pfeile 8 schematisch dargestellt) wurde auf derjenigen Außenseite der Blase 2, die dem höheren Druck ausgesetzt ist, eine Eisschicht gebildet, die etwaige Leckstellen und Unebenheiten an den Anlagestellen verschließt, da der Wassernebel der Leckströmung folgt. Das Temperaturprofil des erstarrten Wassers im Innenraum 5 der Blase 2 war nach etwa zwei Stunden so eingestellt, daß die Temperatur des von der Blase 2 umschlossenen Eisvolumens nahe der Rohrleitungswandung etwa −20°C betrug und zum Blasenmittelpunkt hin auf ca. −10°C anstieg. Die Leistung der Kühlmaschine wurde danach verringert, so daß das Kältemittel mit einer Temperatur von etwa −10°C bis zum Ende des Versuchs umlief. Hierdurch stieg die mittlere Eistemperatur geringfügig an, und das Eisvolumen nahm bis zum Versuchsende geringfügig zu. Es ergab sich eine zuverlässige Sperrung der Rohrleitung 1 für ca. 20 Stunden, also eine Zeit, die für die Ausführung der üblichen Reparaturarbeiten (Reparaturdauer ca. 5 bis 10 Stunden) völlig ausreicht.

Die Blase 2 besteht in dem beschriebenen Ausführungsbeispiel aus einer elastisch dehnbaren Innenhaut oder -schale 20 und einer die Form der Blase 2 gemäß Darstellung in Fig. 1 bestimmenden nur sehr wenig elastisch dehnbaren Außenhaut bzw. -schale 21. Die elastisch dehnbare Innenhaut 20 kann beispielsweise aus einem Gummi- oder Kautschukmaterial und die Außenhaut aus Kunststoff oder einem Gewebe oder geeignetem Gewirk bestehen. Die elastisch dehnbare Innenhaut 20 paßt sich gemäß Darstellung in Fig. 2 der Form der Außenhaut 21 an, wenn die Blase 2 gefüllt ist und unter erhöhtem Innendruck steht. Die sehr wenig dehnbare Außenhaut sorgt für eine ausreichende Stabilität und die Beibehaltung der für die angestrebte Dichtungswirkung notwendigen Form der Blase 2, verhindert also, daß sich die Blase 2 in Axialrichtung der Rohrleitung 1 übermäßig ausdehnt.

Eine zusätzliche oder alternative Möglichkeit der Wärmeabfuhr aus der wassergefüllten Blase 2 ist in Fig. 3 gezeigt. Durch die Tülle bzw. den Anschlußstutzen 3 ist eine Leitungsschlange 10 in den Innenraum 5 der Blase 2 eingeführt. Die Leitungsschlange 10 ist an eine Kältemaschine angeschlossen und führt ein Kältemittel bei einer Temperatur, die das in der Blase befindliche Wasser bis zum äußeren Rand zuverlässig zum Erstarren bringt. Bei dieser Anordnung läßt sich ein rasches Abkühlen des Wasservolumens und Gefrieren des Eisstopfens erreichen. Es ist jedoch zweckmäßig auch hier zusätzlich von außen zu kühlen, da sonst der Fall eintreten kann, daß praktisch alles Wasser unter Volumenvergrößerung erstarrt, ohne daß durch die Volumenvergrößerung ein ausreichender Dichtungsdruck zwischen Blase 2 und Rohrinnenwand hervorgerufen wird. Bei Verwendung eines bei Umgebungstemperaturen festen Verschlußmediums wird das Verschlußmedium zum Verflüssigen beispielsweise über den Mantel 6 (Fig. 1) und/oder die Schlange 10 (Fig. 3) beheizt.

## Patentansprüche

1. Verfahren zum zeitweiligen Verschließen von Großrohrleitungen, bei dem im Bereich des zu verschließenden Abschnittes in der Wandung der Rohrleitung (1) eine Öffnung (4) hergestellt, durch diese eine flüssigkeitsdichte Blase (2) eingeführt und die Blase (2) mit einem wenigstens teilweise flüssigen Medium soweit gefüllt wird, bis die Blase (2) an den Innenwandungen der Rohrleitung (1) anliegt, dadurch gekennzeichnet, daß eine elastisch nur wenig verformbare Blase (2) verwendet wird, daß das die Blase (2) füllende flüssige Medium durch Abkühlen zum Erstarren gebracht wird, wobei die Füllmenge (Inhalt) der Blase (2) so gewählt wird, daß die Blase (2) bei erstarrtem Medium an dem Innenumfang der Rohrleitung (1) anliegt und deren Querschnitt über eine ausreichende Rohrleitungslänge schließt, und daß die Außenhaut der gekühlten Blase (2) auf der Seite, die dem höheren Rohrdruck ausgesetzt wird, mit einem Wassernebel (8) besprüht und eine zusätzlich abdichtende Eisschicht im Grenzbereich zwischen der Blase (2) und der Innenwandung der Rohrleitung (1) aufgebaut wird.

2. Verfahren nach Anspruch 1, dadurch gekennzeichnet, daß als wenigstens teilweise flüssiges Medium Wasser oder ein Wasser/Eisgemisch verwendet wird, das sich beim Erstarren ausdehnt.

3. Verfahren nach Anspruch 1 oder 2, dadurch gekennzeichnet, daß die Temperatur des in der Blase (2) erstarrenden Mediums so geführt wird, daß sich das Medium im erstarrten Zustand langsam weiter ausdehnt und eine Verschlußwirkung der Blase (2) für eine vorgegebene Zeit erreicht wird.

4. Verfahren nach einem der Ansprüche 1 bis 3, dadurch gekennzeichnet, daß nach dem Erstarren die Kühlwirkung so verringert wird, daß die mittlere Eistemperatur konstant bleibt oder stark ansteigt.

5. Verfahren nach Anspruch 1, dadurch gekennzeichnet, daß andere beim Erstarren sich ausdehnende Stoffe, z.B. Kalium-Aluminium-Sulfat (Alaun) als flüssiges Medium verwendet werden.

6. Verfahren nach einem der Ansprüche 1 bis 5, dadurch gekennzeichnet, daß zum Abkühlen des in der Blase (2) befindlichen Mediums Wärme von der Außenwand des die Blase (2) umgebenden Rohrleitungsabschnitts solange abgeführt wird, bis das gesamte Medium erstarrt ist.

7. Verfahren nach einem der Ansprüche 1 bis 6, dadurch gekennzeichnet, daß mindestens zwei Temperaturfühler in die Blase (2) eingesetzt werden, mit denen die Temperaturen im Blaseninneren und an der Blasenoberfläche überwacht werden.

8. Verfahren nach einem der Ansprüche 1 bis 7, dadurch gekennzeichnet, daß ein Kühlmittelstrom über einen geschlossenen Kühlmittelkreis durch den Blaseninnenraum geleitet und zum Wärmeentzug aus dem in der Blase (2) befindlichen Medium verwendet wird.

9. Verfahren nach Anspruch 5 oder 6, dadurch gekennzeichnet, daß die Blase (2) mit durch Erhitzen verflüssigtem Alaun soweit gefüllt wird, bis die Blase (2) an den Innenwandungen der Rohrleitung (1) anliegt, daß die Blase (2) danach soweit abgekühlt wird, bis das in ihr befindliche Alaun erstarrt ist und daß zur Aufhebung der Verschlußwirkung das erstarrte Alaun durch Wärmezufuhr verflüssigt und aus der Blase (2) abgesaugt wird.

10. Verfahren nach Anspruch 9, dadurch gekennzeichnet, daß vor dem Erstarren des Alauns keine Heizschlange in die Blase (2) eingeführt wird und daß zur Aufhebung des Verschlusses solange ein Heizmittel mit einer über dem Schmelzpunkt des Alauns gelegenen Temperatur durch die Heizschlange geführt wird, bis das Alaun verflüssigt ist.

11. Verfahren nach einem der Ansprüche 1 bis 10, dadurch gekennzeichnet, daß das Medium beim Befüllen der Blase (2) unter einen Druck gesetzt wird, der um etwa 1 bis 1,5 m Wassersäule höher ist als der Rohrleitungsistdruck und daß die Luft durch vorheriges Evakuieren oder durch das Medium aus der Blase (2) gedrückt und nach außen abgeleitet wird.

12. Vorrichtung zum zeitweiligen Verschließen von Großrohrleitungen unter Verwendung einer flüssigkeitsdichten Blase (2), die in eine Öffnung (4) der zu verschließenden Rohrleitung (1) einführbar und auf deren Innenquerschnitt aufweitbar ist, dadurch gekennzeichnet, daß die flüssigkeitsdichte, verformbare Blase (2) eine dehnbare Innenhaut (20) und eine diese umschließende, im wesentlichen undehnbare Außenhaut (21) aufweist und daß die Außenhaut (21) von der Innenhaut (20) auf eine etwa sphäroidische Form aufweitbar ist, wobei der kleinste Außendurchmesser der aufgeweiteten Außenhaut (21) etwas größer als der Innendurchmesser der Rohrleitung (1) ist.

13. Vorrichtung nach Anspruch 12, dadurch gekennzeichnet, daß eine Kältemittelleitung (10), die in einen an eine Kältemaschine angeschlossenen Kältemittelkreislauf eingebunden ist, durch die Tülle (3) in den Innenraum (5) der Blase (7) geführt ist.

## Claims

1. A method of temporarily obturating large-diameter pipelines, comprising making an opening (4) in the wall of the pipeline (1) in the section to be isolated, inserting a liquid-proof bag (2) into said pipeline through said opening, and filling said bag (2) by an at least partially liquid fluid until said bag (2) fits closely against the wall of said pipeline (1) characterized in that a bag (2) of limited elastic deformability is used and in that the fluid filling said bag (2) is caused to solidify by cooling, the volume of said fluid being filled into said bag (2) being selected so that said bag (2) fits closely against the wall of said pipeline (1) after the solidification of said fluid and seals off the pipeline cross-section over an adequate pipeline length and in that the outer skin of the cooled bag (2) facing the high-pressure side is sprayed by a water mist (8), and a layer of ice providing an additional sealing effect is formed at the interface between said bag (2) and the wall of said pipeline (1).

2. A method according to claim 1 characterized in that said at least partially liquid fluid is water or a mixture of water and ice expanding during solidification.

3. A method according to claim 1 or 2 characterized in that the temperature of the fluid solidifying inside said bag (2) is controlled so that the solidified fluid continues to expand slowly and in that said bag (2) seals off said pipeline (1) for a predetermined period of time.

4. A method according to any one of claims 1 through 3 characterized in that the cooling effect is, after fluid solidification, reduced so that the average ice temperature remains constant or increases notably.

5. A method according to claim 1 characterized in that said fluid is another substance expanding upon solidification, such as potassium aluminum sulfate (alum).

6. A method according to any one of claims 1 through 5 characterized in that heat is removed from the outer wall of the pipe surrounding said bag (2) for cooling the fluid inside said bag (2) until said fluid has completely solidified.

7. A method according to any one of claims 1 through 6 characterized in that at least two temperature pick-ups are provided in said bag (2) to monitor the temperature inside said bag (2) and on the surface of said bag (2).

8. A method according to any one of claims 1 through 7 characterized in that a refrigerant is passed through the inside of said bag (2) using a closed-cycle refrigerant system to remove heat from the fluid inside said bag (2).

9. A method according to claim 5 or 6 characterized in that said bag (2) is filled with alum liquefied by heating until said bag (2) fits closely against the wall of said pipeline (1) and in that said bag (2) is thereupon cooled until the alum contained therein has solidified and in that, to stop the sealing-off effect, said solidified alum is liquefied by heat transfer and then extracted from said bag (2).

10. A method according to claim 9 characterized in that a heat exchanger coil is inserted in said bag (2) prior to the solidification of said alum and in that, to stop the sealing-off effect, a heating agent at a temperature above the melting point of the alum is passed through said heat exchanger coil until said alum has liquefied.

11. A method according to any one of claims 1 through 10 characterized in that said fluid is pressurized upon filling said bag (2), the pressure of said fluid being approximately 1 to 1.5 meters of water column higher than the pressure inside said pipeline, and in that the air is vented from said bag (2) to atmosphere by evacuation prior to filling or by being displaced by said fluid.

12. A device for temporarily obturating large-diameter pipelines, comprising a liquid-proof bag (2) insertable through an opening (4) into the pipeline (1) to be obturated and expandable to the internal cross-section of said pipeline (1), characterized in that said liquid-proof deformable bag (2) comprises an expandable inner skin (20) and a substantially non-expandable outer skin (21) surrounding said inner skin (20), and in that said outer skin (21) may be widened by said inner skin (20) to take a substantially spheroidal shape, the smallest outside diameter of said widened outer skin (21) being slightly larger than the internal diameter of said pipeline (1).

13. A device according to claim 12 characterized in that refrigerant piping (10) integrated in a refrigerant cycle being connected with a refrigeration unit enters the inside (5) of said bag (2) through a nozzle (3).

**Revendications**

1. Méthode pour l'isolement temporaire de grands tuyaux, prévoyant la réalisation d'une ouverture (4) dans la paroi du tuyau dans la zone du tronçon à isoler, à travers laquelle un ballon étanche aux liquides est introduit, le ballon (2) étant rempli d'un fluide au moins en partie liquide, jusqu'à ce que le ballon (2) colle contre la paroi intérieure du tuyau (1), caractérisée par le fait qu'un ballon (2) à faible déformation élastique est utilisé, que le fluide liquide remplissant le ballon (2) est solidifié par refroidissement, le volume du fluide étant choisi de manière à ce que le ballon (2) rempli de fluide solidifié colle contre la circonférence intérieure du tuyau (1) et bloque la section sur une longueur de tuyau suffisamment grande, et que la côté de la peau extérieure du ballon (2) refroidie, qui est exposée à la pression élevée dans le tuyau est aspergée par un brouillard d'eau (8) provoquant la formation d'une couche de glace d'étanchéification supplémentaire à l'interface entre le ballon (2) et la paroi intérieure du tuyau (1).

2. Méthode selon la revendication 1, caractérisée par le fait que de l'eau ou un mélange d'eau/glace qui s'étend lors de la solidification est utilisé comme fluide d'au moins en partie liquide.

3. Méthode selon l'une quelconque des revendications 1 ou 2, caractérisée par le fait que la température du fluide se solidifiant à l'intérieure du ballon (2) est influencée de la manière à ce que le fluide en état solide continue à s'étendre lentement pour assurer l'isolement du tuyau par le ballon (2) pour une période prédéterminée.

4. Méthode selon l'une quelconque des revendications 1 à 3, caractérisée par le fait que, après solidification, le refroidissement est réduit de la manière à ce que la température moyenne de la glace reste constante ou augmente sensiblement.

5. Méthode selon la revendication 1, caractérisée par le fait qu'une autre matière qui s'étend lors d'une solidification comme par exemple du sulfate de potassium/aluminium (alun) est utilisée comme fluide liquide.

6. Méthode selon l'une quelconque des revendications 1 à 5, caractérisée par le fait que pour le refroidissement du fluide contenu dans le ballon (2), la chaleur est évacuée de la paroi extérieure du tronçon de tuyau autour du ballon (2) jusqu'à ce que le fluide s'est complètement solidifié.

7. Méthode selon l'une quelconque des revendications 1 à 6, caractérisée par le fait qu'au moins deux capteurs de température sont prévus dans le ballon (2) pour pouvoir contrôler la température à l'intérieur du ballon et à la surface du ballon.

8. Méthode selon l'une quelconque des revendications 1 à 7, caractérisée par le fait qu'un flux de fluide caloporteur est passé par un cycle fermé à travers l'intérieur du ballon et utilisé pour l'évacuation de la chaleur du fluide contenu dans le ballon (2).

9. Méthode selon l'une quelconque des revendications 5 ou 6, caractérisée par le fait que le ballon (2) est rempli d'alun rendu liquide par réchauffement jusqu'à ce que le ballon (2) colle contre la paroi intérieure du tuyau (1), que le ballon (2) est ensuite refroidi jusqu'à ce que l'alun contenu dans le ballon (2) est solidifié, et que, pour re-ouvrir le tuyau, l'alun solide est de nouveau rendu liquide par réchauffement et évacué du ballon (2) par aspiration.

10. Méthode selon la revendication 9, caractérisée par le fait qu'un serpentin réchauffeur est inséré dans le ballon (2) avant la solidification de l'alun et que, pour re-ouvrir le tuyau, un fluide est circulé à travers le serpentin réchauffeur, dont la température est supérieure au point de fusion de l'alun, jusqu'à ce que l'alun est rendu liquide.

11. Méthode selon l'une quelconque des revendications 1 à 10, caractérisée par le fait que le fluide est mis sous pression lors du remplissage du ballon (2), la pression étant de 1 à 1,5 m de colonne d'eau supérieure à la pression intérieure réelle dans le tuyau, et que l'air est balayé du ballon (2) vers l'extérieur par évacuation préalable ou par le fluide.

12. Dispositif pour l'isolement temporaire de grands tuyaux comprenant un ballon étanche aux liquides (2) qui peut être inséré dans le tuyau à isoler (1) par une ouverture (4) et être gonflé jusqu'à la section intérieure du tuyau, caractérisé par le fait que le ballon étanche aux liquides et déformable est constitué d'une peau intérieure élastique (20) et d'une peau extérieure (21) peu élastique et que la peau extérieure (21) peut être gonflée par la peau intérieure (20) pour prendre une forme à peu près sphéroïdale, le diamètre extérieur le plus petit de la peau extérieure (21) gonflée étant un peu supérieur au diamètre intérieur du tuyau (1).

13. Dispositif selon la revendication 12, caractérisé par le fait qu'une conduite de fluide caloporteur (10) intégrée dans le cycle fermé de refroidissement raccordé à une machine frigorifique passe à travers une douille (3) à l'intérieur (5) du ballon (2).

Fig.1

Fig.2

Fig.3